# EUROPÄISCHE PATENTSCHRIFT

(11) **EP 1 098 295 B1**
(45) Veröffentlichungstag und Bekanntmachung des Hinweises auf die Patenterteilung: **31.03.2004**
(21) Anmeldenummer: 00123831.0
(22) Anmeldetag: 02.11.2000
(51) Int. Cl.: G10K 11/24

(54) **Ultraschallwellenleiter**
Waveguide for ultrasound
Guide d'onde pour les ultrasons

(30) Priorität: 03.11.1999 DE 19952510; 16.11.1999 DE 19955165
(43) Veröffentlichungstag der Anmeldung: 09.05.2001
(73) Patentinhaber: Krohne AG, 4019 Basel (CH)
(72) Erfinder: Heijnsdijk, Alexander Marnix, 3356 BW Papendrecht (NL); van Klooster, Jeroen, Dipl.-Ing., 4001 JV TIEL (NL)
(74) Vertreter: Gesthuysen, von Rohr & Eggert

(56) Entgegenhaltungen:
- US-A- 3 352 376
- US-A- 4 217 786
- US-A- 4 337 843

## Beschreibung

Die Erfindung betrifft einen Ultraschallwellenleiter zum Führen eines in einem vorbestimmten Frequenzbereich liegenden Ultraschallsignals. Solche Ultraschallwellenleiter werden z.B. in Ultraschalldurchflußmeßgeräten verwendet. In diesen Ultraschalldurchflußmeßgeräten wird typischerweise für einen Ultraschalltransducer ein Piezokristall verwendet, mit dem Ultraschallsignale erzeugt bzw. Ultraschallsignale detektiert werden.

Piezokristalle können oberhalb einer bestimmten Temperatur, der sogenannten Curie-Temperatur (T_{c}), nicht mehr verwendet werden, da oberhalb von T_{c} keine ferroelektrische bzw. ferromagnetische Phase des Kristalls existiert, die Voraussetzung für dessen piezoelektrische Eigenschaft ist. Ist jedoch das strömende Medium, dessen Durchfluß mit dem Ultraschalldurchflußmeßgrät gemessen werden soll, sehr heiß, so daß dessen Temperatur über der Curie-Temperatur des Piezokristalls liegt, so ist für einen verläßlichen Betrieb das Ultraschalldurchflußmeßgeräts eine gewisse thermische Isolierung des Ultraschalltransducers von dem heißen Medium erforderlich. Eingesetzt werden für eine solche thermische Isolierung Ultraschallwellenleiter, die einerseits eine möglichst gute Wärmeisolation des Ultraschalltransducers von dem heißen Medium und andererseits eine möglichst verlustfreie und ungestörte Übertragung des Ultraschallsignals gewährleisten sollen. Mit einem solchen Ultraschallwellenleiter kann dann das von einem Ultraschalltransducer erzeugte Ultraschallsignal in das strömende Medium einkgekoppelt werden, während der eigentliche Ultraschalltransducer von dem heißen Medium räumlich entfernt und thermisch von diesem isoliert ist.

In herkömmlichen Ultraschalldurchflußmeßgeräten werden als Ultraschallwellenleiter z. B. Konstruktionen verwendet, wie sie in der WO 96/41157 beschrieben sind. Dabei wird als Ultraschallwellenleiter eine Mehrzahl von zueinander parallelen, sehr dünnen Stäben verwendet, wobei die einzelnen Stabdurchmesser jeweils wesentlich geringer als die Wellenlänge des zu führenden Ultraschallsignals sind. Typischerweise werden dabei die Stäbe eng aneinander anliegend in eine Röhre eingepaßt, die den Stäben seitlich Halt bietet und somit einen kompakten Ultraschallwellenleiter liefert. Diese herkömmliche Konstruktion ist jedoch insofern problematisch, als daß für das Führen von Ultraschallsignalen mit sehr hohen Frequenzen von über 1 MHz Durchmesser der Stäbe von deutlich unter 0,1 mm erforderlich sind. Die Herstellung solcher dünnen Stäbe ist jedoch sehr kompliziert, aufwendig und kostspielig.

US 3 352 376 offenbart einen stafuel von Folien, die als ultraschallwellenleiter funktionieren. Solche ultraschallwellenleiter weiren, in einen Ausführung, eine schichtdicke von 0.1 mm auf.

Es ist nun die Aufgabe der Erfindung, einen einfach herstellbaren und preisgünstigen Ultraschallwellenleiter anzugeben, mit dem auch hochfrequente Ultraschallsignale mit einer Frequenz bis zu 20 MHz mit geringer Dämpfung und geringen Störungen übertragbar sind.

Erfindungsgemäß ist die zuvor hergeleitet und aufgezeigte Aufgabe durch einen Ultraschallwellenleiter nach Anspruch 1 gelöst, wobei, der Ultraschallwellenleiter eine zusammengerollte Folie aufweist, deren Schichtdicke wesentlich geringer als die geringste Wellenlänge des in dem vorbestimmten Frequenzbereich liegenden Ultraschallsignals in dem Folienmaterial ist. Somit wird erfindungsgemäß die Tatsache ausgenutzt, daß die Dämpfungen und Störungen eines Ultraschallsignals in einem Ultraschallwellenleiter abhängig von dessen Abmessungen sind. Dämpfungen und Störungen des Ultraschallsignals in dem Ultraschallwellenleiter rühren im wesentlichen von Streuung und Dispersion des Ultraschallsignals her. Diese Effekte treten jedoch dann deutlich in den Hintergrund, wenn die geometrischen Abmessungen, d. h. die Breite und die Höhe, des Ultraschallwellenleiters wesentlich geringer als die Wellenlänge des Ultraschallsignals in dem Material des Ultraschallwellenleiters wird. Keine Streuung und keine Dispersion des Ultraschallsignals sind ebenfalls dann zu erwarten, wenn der Ultraschallwellenleiter praktisch unendlich weit ausgedehnt ist.

Bei einer Folie, die in ihrer Ausbreitungsebene quasi als unendlich weit ausgedehnt angesehen werden kann, ist dementsprechend die maßgebliche Abmessung die Schichtdicke der Folie, die somit entsprechend klein gewählt werden muß. Wird eine solche Folie zusammengerollt, erhält man einen stabförmigen Ultraschallwellenleiter, der die Anforderungen an eine praktisch streuungs- und dispersionsfreie Ultraschallleitung erfüllt. Obwohl bei einer zusammengerollten Folie einander benachbarte Folienschichten direkt aufeinanderliegen, entsprechen die Ultraschalleitungseigenschaften einer solchen zusammengerollten Folie nicht denen eines entsprechenden Stabes aus einem Vollmaterial. Aufgrund der Grenzflächen zwischen den einzelnen Schichten kann für die Ultraschalleitungseigenschaften einer solchen zusammengerollten Folie jede Schicht der Folie einzeln betrachtet werden; zwischen den aufeinanderliegenden Schichten findet ein Impedanzsprung statt, der die einzelnen Schichten für die Ultraschalleitung somit betreffend die Leitung des Ultraschallsignals voneinander "isoliert". Insofern ist es für eine annähernd streuungs- und dispersionsfreie Leitung des Ultraschallsignals in dem Ultraschallwellenleiter ausreichend, wenn jede Schicht für sich genommen die oben angegebenen geometrischen Anforderungen erfüllt, im wesentlichen also, daß ihre Schichtdicke wesentlich geringer als die Wellenlänge des zu übertragenden Ultraschallsignals in dem Material des Ultraschallwellenleiters ist.

Bei der Dimensionierung des erfindungsgemäßen Ultraschallwellenleiters mit einer zusammengerollten Folie ist somit zuerst zu prüfen, welche maximale Frequenz ein durch den Ultraschallwellenleiter zu führendes Ultraschallsignal aufweist, so daß die Schichtdicke der zu verwendenden Folie entsprechend gering gewählt werden kann, so daß Streuung und Dispersion des Ultraschallsignals in dem Ultraschallwellenleiter weitgehend unterdrückt werden.

Der erfindungsgemäße Ultraschallwellenleiter kann in allen Wellenlängenbereichen vom hörbaren Spektrum bis zu Frequenzen über 20 MHz verwendet werden. Vorzugsweise ist jedoch vorgesehen, den erfindungsgemäßen Ultraschallwellenleiter in einem Frequenzbereich von 15 kHz bis 20 MHz einzusetzen, wobei dann die Schichtdicke der Folie weniger als 0,1 mm beträgt.

Als Materialien für die zusammengerollte Folie des erfindungsgemäßen Ultraschallwellenleiters ist eine Vielzahl von Materialien verwendbar, vorzugsweise besteht die Folie jedoch aus Metall und/oder Keramik und/oder Kunststoff.

Mit einer zusammengerollten Folie alleine kann schon ein erfindungsgemäßer Ultraschallwellenleiter mit den angegebenen guten Leitungseigenschaften erzielt werden. Vorzugsweise ist jedoch vorgesehen, daß die Folie - bevorzugt mit Paßsitz - in eine Röhre eingesteckt ist. Die Röhre stabilisiert dabei den Ultraschallwellenleiter und erleichtert dessen Einbau in z.B. eine Vorrichtung eines Ultraschalldurchflußmeßgeräts. Für die Röhre selbst ist wiederum eine Vielzahl von Materialien verwendbar, vorzugsweise besteht die Röhre jedoch aus Metall.

An einem Ende der zusammengerollten Folie ist typischerweise ein Ultraschalltransducer vorgesehen, so daß Ultraschallsignale in den Ultraschallwellenleiter einkoppelbar sind bzw. Ultraschallsignale aus dem Ultraschallwellenleiter empfangbar sind. Der Ultraschalltransducer, der im allgemeinen einen Piezokristall aufweist, kann dazu direkt auf eine unbearbeitete Endfläche der Folienschichten aufgebracht sein. Vorzugsweise ist jedoch vorgesehen, daß die Enden des die zusammengerollte Folie aufweisenden Ultraschallwellenleiters verschweißt sind. Besonders bevorzugt ist eine Verschweißung mit einem TIG-Verfahren (Tungsten Inert Gas), also durch Wolfram-Inertgas-Schweißen. Eine besonders glatte Fläche und somit eine optimale Einkoppelbarkeit des Ultraschallsignals in den erfindungsgemäßen Ultraschallwellenleiter wird dann erzielt, wenn die verschweißten Enden nach dem Verschweißen plangedreht werden.

Gemäß einer bevorzugten Weiterbildung der Erfindung ist vorgesehen, daß sich die Schichtdicke der Folie von innen nach außen verändert. Es kann jedoch auch vorgesehen sein, daß der Ultraschallwellenleiter mehrere zusammengerollte Folien mit unterschiedlichen Schichten und/oder unterschiedlichen Materialien aufweist. Mit diesen Maßnahmen wird erreicht, daß das von dem Ultraschallwellenleiter abgegebene Ultraschallsignal auf eine vorbestimmte Weise geformt und somit z. B. bestimmten Anwendungen entsprechend geleitet bzw. fokussiert werden kann. Diese Möglichkeit beruht darauf, daß die Ausbreitungsgeschwindigkeit des Ultraschallsignals in dem Ultraschallwellenleiter von der jeweiligen Impedanz und somit unter anderem von der Schichtdicke der jeweiligen Folienschicht abhängt, in dem der entsprechende Anteil des Ultraschallsignals geführt wird. Entsprechendes gilt für die verschiedenen Ausbreitungsgeschwindigkeiten des Ultraschallsignals in unterschiedlichen Materialien.

Der erfindungsgemäße Ultraschallwellenleiter ist vielseitig verwendbar. Bevorzugt findet jedoch ein Einbau des erfindungsgemäßen Ultraschallwellenleiters in ein Ultraschalldurchflußmeßgerät statt, mit dem der Durchfluß eines Mediums mit hoher Temperatur bestimmt werden soll.

Im einzelnen gibt es nun eine Vielzahl von Möglichkeiten, den erfindungsgemäßen Ultraschallwellenleiter auszugestalten und weiterzubilden. Dazu wird einerseits auf die dem Patentanspruch 1 nachgeordneten Patentansprüche und andererseits auf die folgende detaillierte Beschreibung eines bevorzugten Ausführungsbeispiels der Erfindung in Verbindung mit der Zeichnung verwiesen. In der Zeichnung zeigt
- Fig. 1: schematisch einen Ultraschallwellenleiter gemäß einem bevorzugten Ausführungsbeispiel der Erfindung und
- Fig. 2: schematisch einen Ultraschallwellenleiter gemäß einem bevorzugten Ausführungsbeispiel der Erfindung mit angekoppeltem Ultraschalltransducer im Schnitt.

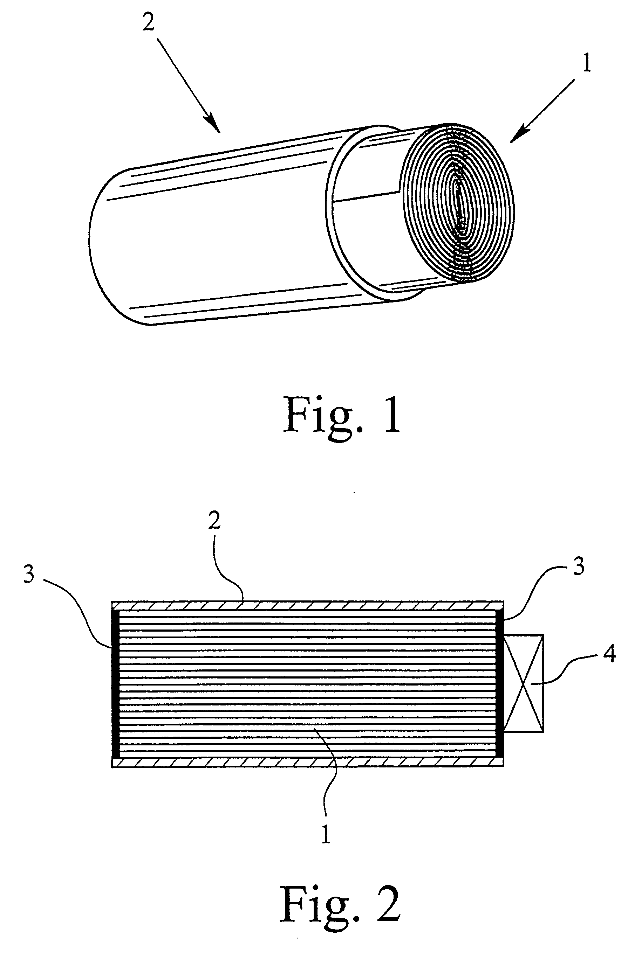

Aus Fig. 1 ist schematisch ein Ultraschallwellenleiter gemäß einem bevorzugten Ausführungsbeispiel der Erfindung ersichtlich, der eine zusammengerollte Folie 1 aufweist, die in eine Röhre 2 mit Paßsitz eingesteckt wird. Gemäß dem in Fig. 1 dargestellten bevorzugten Ausführungsbeispiel der Erfindung bestehen sowohl die Folie 1 als auch die Röhre 2 aus Edelstahl. Die Darstellung des Ultraschallwellenleiters in der Fig. 1 ist nicht maßstabsgemäß. Die Schichtdicke der Folie 1 beträgt vorliegend nämlich 0, 1 mm, so daß auch Ultraschallsignale mit einer Frequenz, die 1 MHz deutlich übersteigt, noch ohne gravierende Streuungs- und Dispersionseffekte geführt werden können. Die Länge des Ultraschallwellenleiters gemäß dem ersten bevorzugten Ausführungsbeispiel der Erfindung beträgt 0,6 m, und die Röhre 2 weist eine Wandstärke von 1 mm bei einem Innendurchmesser von 14 mm auf. Mit diesem Ultraschallwellenleiter läßt sich bei einem Ultraschallsignal mit einer Frequenz von 1 MHz eine Dämpfung von weniger als 5 dB/m erreichen.

Aus Fig. 2 ist ein Ultraschallwellenleiter gemäß einem bevorzugten Ausführungsbeispiel der Erfindung mit verschweißten und plangedrehten Enden 3 sowie einem an einem dieser Enden 3 angekoppelten Ultraschalltransducer 4 ersichtlich. Durch TIG-Verschweißen und nachfolgendes Plandrehen der Enden des Ultraschallwellenleiters wird eine äußerst glatte Oberfläche erzielt, so daß eine optimale Übertragung der im Ultraschalltransducer 4 erzeugten Ultraschallsignale in den Ultraschallwellenleiter bzw. ein ungestörtes Empfangen von Ultraschallsignalen aus dem Ultraschallwellenleiter mit dem Ultraschalltransducer 4 möglich ist.

## Patentansprüche

1. Ultraschallwellenleiter zum Führen eines in einem vorbestimmten Frequenzbereich liegenden Ultraschallsignals, wobei der Ultraschallwellenleiter eine Folie (1) aufweist, deren Schichtdicke wesentlich geringer als die geringste Wellenlänge des in dem vorbestimmten Frequenzbereich liegenden Ultraschallsignals in dem Folienmaterial ist, **dadurch gekennzeichnet, daß** die Folie zusammengerollte ist.

2. Ultraschallwellenleiter nach Anspruch 1, **dadurch gekennzeichnet, daß** die Schichtdicke der Folie (1) derart gering gewählt ist, daß beim Führen des Ultraschallsignals in dem Ultraschallwellenleiter Streuung und Dispersion des Ultraschallsignals weitgehend unterdrückt werden.

3. Ultraschallwellenleiter nach Anspruch 1 oder 2, **dadurch gekennzeichnet, daß** der Frequenzbereich 15 kHz bis 20 MHz beträgt.

4. Ultraschallwellenleiter nach Anspruch 3, **dadurch gekennzeichnet, daß** die Schichtdicke der Folie (1) weniger als 0,1 mm beträgt.

5. Ultraschallwellenleiter nach einem der Ansprüche 1 bis 4, **dadurch gekennzeichnet, daß** die Folie (1) aus Metall und/oder Keramik und/oder Kunststoff besteht.

6. Ultraschallwellenleiter nach einem der Ansprüche 1 bis 5, **dadurch gekennzeichnet, daß** die Folie (1) - vorzugsweise mit Paßsitz - in eine - vorzugsweise metallische - Röhre (2) eingesteckt ist.

7. Ultraschallwellenleiter nach Anspruch 6, **dadurch gekennzeichnet, daß** die Enden des Ultraschallwellenleiters verschweißt - vorzugsweise TIG-verschweißt - und plangedreht sind.

8. Ultraschallwellenleiter nach einem der Ansprüche 1 bis 7, **dadurch gekennzeichnet, daß** sich die Schichtdicke der Folie (1) von innen nach außen ändert.

9. Ultraschallwellenleiter nach einem der Ansprüche 1 bis 8, **dadurch gekennzeichnet, daß** der Ultraschallwellenleiter mehrere zusammengerollte Folien (1) mit unterschiedlichen Schichtdicken und/oder unterschiedlichen Materialien aufweist.

10. Ultraschallwellenleiter nach einem der Ansprüche 1 bis 9, **dadurch gekennzeichnet, daß** an einem der beiden Enden der zusammgenrollten Folie (1) ein Ultraschalltransducer (4) derart vorgesehen ist, daß mit diesem Ultraschallsignale in den Ultraschallwellenleiter einkoppelbar und/oder aus dem Ultraschallwellenleiter empfangbar sind.

11. Ultraschalldurchflußmeßgerät mit einem Ultraschallwellenleiter nach einem der Ansprüche 1 bis 10.

## Claims

1. Ultrasonic wave guide for guiding an ultrasonic signal in a predetermined frequency range wherein the ultrasonic wave guide has a film (1) whose layer thickness is less than the smallest wave length of the ultrasonic signal in the predetermined frequency range in the film material, **characterized in that** the film is coiled up.

2. Ultrasonic wave guide according to claim 1, **characterized in that** the layer thickness of the film (1) is chosen to be so thin that diffusion and dispersion are largely suppressed while guiding the ultrasonic signal in the ultrasonic wave guide.

3. Ultrasonic wave guide according to claim 1 or 2, **characterized in that** the frequency range is from 15 kHz to 20 MHz.

4. Ultrasonic wave guide according to claim 3, **characterized in that** the layer thickness of the film (1) is less than 0.1 mm.

5. Ultrasonic wave guide according to any one of claims 1 to 4, **characterized in that** the film (1) is of metal and/or ceramic and/or plastic.

6. Ultrasonic wave guide according to any one of claims 1 to 5, **characterized in that** the film (1) - preferably with a perfect fit - is pushed into a - preferably metal - tube (2).

7. Ultrasonic wave guide according to claim 6, **characterized in that** the ends of the ultrasonic wave-guide are welded together - preferably TIG welding - and turned planar.

8. Ultrasonic wave guide according to any one of claims 1 to 7, **characterized in that** the layer thickness of the film (1) changes from inside to outside.

9. Ultrasonic wave guide according to any one of claims 1 to 8, **characterized in that** the ultrasonic wave guide comprises coiled up films (1) with different layer thicknesses and/or different materials.

10. Ultrasonic wave guide according to any one of claims 1 to 9, **characterized in that** on one of the two ends of the coiled up film (1) an ultrasonic transducer (4) is provided such that with this ultrasonic transducer (4) ultrasonic signals can be sent into the ultrasonic wave guide and/or can be received from the ultrasonic wave guide.

11. Ultrasonic flow meter with an ultrasonic wave guide according to any one of claims 1 to 10.

## Revendications

1. Guide d'ondes ultrasonores pour le guidage d'un signal ultrasonore se trouvant dans une gamme de fréquences prédéterminée, dans lequel le guide d'ondes ultrasonores présente une feuille (1) dont l'épaisseur de couche est essentiellement inférieure à la longueur d'onde la plus petite du signal ultrasonore se trouvant dans la gamme de fréquences prédéterminée dans la matière constituant la feuille, **caractérisé en ce que** la feuille est une feuille enroulée.

2. Guide d'ondes ultrasonores selon la revendication 1, **caractérisé en ce qu'**on choisit une épaisseur de couche de la feuille (1) à ce point minime que, lors du guidage du signal ultrasonore dans le guide d'ondes ultrasonores, on supprime dans une large mesure la diffusion et la dispersion du signal ultrasonore.

3. Guide d'ondes ultrasonores selon la revendication 1 ou 2, **caractérisé en ce que** la gamme de fréquences s'élève de 15 kHz à 20 MHz.

4. Guide d'ondes ultrasonores selon la revendication 3, **caractérisé en ce que** l'épaisseur de couche de la feuille (1) est inférieure à 0,1 mm.

5. Guide d'ondes ultrasonores selon l'une quelconque des revendications 1 à 4, **caractérisé en ce que** la feuille (1) est constituée de métal et/ou de céramique et/ou d'une matière synthétique.

6. Guide d'ondes ultrasonores selon l'une quelconque des revendications 1 à 5, **caractérisé en ce que** la feuille (1) est insérée - de préférence en ajustage serré - dans un tube (2) - de préférence un tube métallique - .

7. Guide d'ondes ultrasonores selon la revendication 6, **caractérisé en ce que** les extrémités du guide d'ondes ultrasonores sont soudées - de préférence sont soudées via un soudage à l'arc en atmosphère inerte avec une électrode de tungstène (soudage TIG) - et sont soumises à un dressage au tour.

8. Guide d'ondes ultrasonores selon l'une quelconque des revendications 1 à 7, **caractérisé en ce que** l'épaisseur de couche de la feuille (1) se modifie de l'intérieur vers l'extérieur.

9. Guide d'ondes ultrasonores selon l'une quelconque des revendications 1 à 8, **caractérisé en ce que** le guide d'ondes ultrasonores présente plusieurs feuilles enroulées (1) possédant des épaisseurs de couches différentes et/ou des matériaux différents.

10. Guide d'ondes ultrasonores selon l'une quelconque des revendications 1 à 9, **caractérisé en ce qu'**on prévoit, à une des deux extrémités de la feuille enroulée (1) un transducteur d'ultrasons (4) de telle sorte qu'avec lui on puisse alimenter des signaux ultrasonores dans le guide d'ondes ultrasonores et/ou réceptionner les signaux en question à partir du guide d'ondes ultrasonores.

11. Instrument de mesure du débit par ultrasons comprenant un guide d'ondes ultrasonores selon l'une quelconque des revendications 1 à 10.
